# EUROPÄISCHE PATENTSCHRIFT

(11) **EP 2 463 493 B1**
(45) Veröffentlichungstag und Bekanntmachung des Hinweises auf die Patenterteilung: **17.06.2015**
(21) Anmeldenummer: 11190575.8
(22) Anmeldetag: 24.11.2011
(51) Int. Cl.: F16L 27/111, F16L 51/02, F01N 13/14, F01N 13/18

(54) **Flexibles Leitungselement und Verfahren zum Aufbringen eines Gestrickeschlauchs auf einen Metallbalg**
Flexible conduit element and method for applying a knit tube to a metal bellows
Élément conducteur flexible et procédé d'application d'un tuyau en tissu tricoté sur un soufflet métallique

(30) Priorität: 09.12.2010 DE 102010054029
(43) Veröffentlichungstag der Anmeldung: 13.06.2012
(73) Patentinhaber: Witzenmann GmbH, 75175 Pforzheim (DE)
(72) Erfinder: Noltenius, Carsten, 75399 Unterreichenbach (DE); Kunzmann, Thomas, 75180 Pforzheim (DE); Bessler, Frank, 75446 Wiernsheim (DE)
(74) Vertreter: Lemcke, Brommer & Partner Patentanwälte Partnerschaft mbB

(56) Entgegenhaltungen:
- EP-A1- 1 607 598
- DE-A1-102008 017 598
- DE-C1- 19 533 627
- DE-U1- 29 823 707
- DE-U1-202010 005 339

## Beschreibung

Die Erfindung betrifft ein flexibles Leitungselement, insbesondere für die Abgasanlage eines Kraftfahrzeugs, nach dem Oberbegriff des Patentanspruchs 1. Des Weiteren betrifft die vorliegende Erfindung ein Verfahren zum Aufbringen eines aus Metalldraht gefertigten Gestrickeschlauchs auf einen Metallbalg, um diesen zu dämpfen und mit diesem ein flexibles Leitungselement insbesondere für die Abgasanlage eines Kraftfahrzeugs zu bilden.

Ein flexibles Leitungselement der vorliegenden Art umfasst demnach einen schraubengangförmig oder ringförmig gewellten Metallbalg sowie einen aus Metalldraht gefertigten Gestrickering oder Gestrickeschlauch, der zur Bedämpfung von Schwingungen auf den Metallbalg aufgesetzt ist und zumindest einen sich axial erstreckenden Abschnitt desselben überdeckt, also im Wesentlichen koaxial mit dem Metallbalg angeordnet ist. Der Gestrickering oder Gestrickeschlauch - im Folgenden wird zur Vereinfachung nur von einem Gestrickeschlauch gesprochen, was einen Gestrickering umfassen soll - sitzt mittels zumindest eines um den Schlauchumfang umlaufenden, durch Verpressen verdichteten Bereichs kraftschlüssig und/oder formschlüssig auf dem Metallbalg.

Der bevorzugte Anwendungsbereich der vorliegenden Erfindung ist die Abgasanlage eines Kraftfahrzeugs. Eine solche Abgasanlage ist üblicherweise an der Karosserie des Kraftfahrzeugs befestigt, und sie muss gleichzeitig gasdicht mit dem Verbrennungsmotor des Kraftfahrzeugs verbunden sein. Der Betrieb des Kraftfahrzeugs führt jedoch aufgrund von Wärmeausdehnungen, Schlechtweganregungen, Lastwechselreaktionen des Motors und dergleichen zu axialen, lateralen und/oder angularen Relativbewegungen zwischen dem Motor und der Abgasanlage. Darüber hinaus werden auch drehzahlabhängige Motorschwingungen durch Körperschallleitung in die Abgasanlage und weiter in die Karosserie eingeleitet, was den Schallpegel innerhalb und außerhalb des Kraftfahrzeugs nachteilig erhöht.

Daher werden üblicherweise flexible Leitungselemente in die Abgasleitungen eingebaut, die als zentrales Element einen Metallbalg umfassen, welcher in der Lage ist, axiale, laterale und angulare Bewegungen sowie Wärmeausdehnungs-Längenänderungen aufzunehmen, ohne die Gasdichtheit der Abgasanlage zu gefährden. Schwingungen und Vibrationen werden von einem Metallbalg allerdings nur dann aufgenommen und nicht weitergeleitet, soweit dieser nicht im Bereich einer Eigenfrequenz angeregt wird.

Um die Einleitung von drehzahlabhängigen Motorschwingungen als Körperschall in die Abgasanlage zu vermindern, werden daher die Eigenfrequenzen des Metallbalgs mittels eines Gestrickerings oder Gestrickeschlauchs aus Metalldraht so bedämpft, dass der Metallbalg bei den im Kraftfahrzeugbetrieb vorkommenden Schwingungsfrequenzen nicht in eine Resonanzschwingung gerät. Hierzu wird der Gestrickeschlauch zur Bedämpfung von Schwingungen üblicherweise auf den Metallbalg aufgezogen, so dass er zumindest einen Abschnitt desselben überdeckt.

Beispiele einschlägiger flexibler Leitungselemente finden sich in der DE 200 23 409 U1, der EP 1 607 598 B1, der DE 10 2007 038 509 A1 und der DE 10 2008 017 598 A1.

In diesen Schriften zum Stand der Technik wurde bereits ein Problem vermieden, das sich bei den ersten Versuchen, einen Gestrickeschlauch über einen Metallbalg zu ziehen, ergeben hatte: Wenn man den Gestrickeschlauch bis zu den Anschlussstellen des Metallbalgs an die weiterführenden Rohrleitungen, also die Balgborde führt und dort mittels üblicher Endhülsen fixiert, ergibt sich eine nachteilige, gegebenenfalls zerstörende radiale Krafteinleitung vom Gestrickeschlauch in die erste und letzte Balgwelle, da der Gestrickeschlauch dort umgelenkt wird. Weiterhin ergibt sich an diesen Stellen neben der erhöhten mechanischen Wechselwirkung zwischen den Bauteilen eine besonders hohe thermische Belastung des außenliegenden Gestrickeschlauchs, der hierdurch an diesen Stellen signifikant korrosionsanfällig wird.

Die genannten Schriften zum Stand der Technik vermeiden dieses Problem dadurch, dass der Gestrickeschlauch jeweils nicht bis zu den Balgborden reicht, sondern im gewellten Bereich des Metallbalgs an diesem festgelegt wird:
In der DE 200 23 409 U1 wird der Gestrickschlauch zu diesem Zweck als Ganzes zu einem Drahtkissen verdichtet und mit einer radial innenliegenden wellenförmigen Einprägung versehen, so dass er formschlüssig sowie aufgrund einer gewissen Elastizität auch kraftschlüssig auf dem Metallbalg fixiert ist. Dies ist nach diesem Stand der Technik möglich, da das hier beschriebene Leitungselement lediglich zur Abkopplung hochfrequenter Schwingungen vorgesehen ist, die von Turboladern und dergleichen erzeugt werden, so dass der Metallbalg nur wenige Wellen umfasst und dementsprechend sehr kurz und relativ steif ausgebildet ist. Auf einem eher weichen, längeren Metallbalg kann ein aus der DE 200 23 409 U1 bekanntes Drahtkissen kaum mit vertretbarem Aufwand aufgebracht werden. Darüber hinaus stört die radiale Ausdehnung eines solchen Drahtkissens in manchen Einbausituationen des flexiblen Leitungselements, und der hohe Materialeinsatz ist nicht immer erwünscht.

In der EP 1 607 598 A1 ist zum Befestigen des dortigen Gestrickeschlauchs am dortigen Metallbalg an beiden Enden des Gestrickeschlauchs jeweils ein radial verdickter Umfangsbereich vorgesehen. Dieser Umfangsbereich ist gegenüber dem restlichen Gestrickeschlauch radial nach innen eingezogen und verhakt sich hierdurch an den Außenkrempen der vordersten Hauptwellen des Metallbalgs. Die radial verdickten Umfangsbereiche werden hierbei durch axiales Verpressen der im Grundzustand die Balgborde überdeckenden Enden des Gestrickeschlauchs hergestellt. Hierbei wird ein spezielles Verpresswerkzeug verwendet, welches sicherstellt, dass das Gestricke bei der axialen Krafteinleitung nicht radial nach außen ausweichen kann, sondern sich radial nach innen verdickt. Eine kraftschlüssige Festlegung des Gestrickeschlauchs am Metallbalg ist nicht vorgesehen. Problematisch bei diesem Stand der Technik ist die Tatsache, dass sich der Gestrickeschlauch nur in sehr begrenztem Maß längen kann, jedenfalls deutlich weniger als dies dem Metallbalg möglich ist. Daher kann es Betriebszustände geben, in denen der Balg mehr gestreckt wird, als dies dem Gestrickeschlauch möglich ist, so dass dessen verdickte Bereiche von ihrer korrekten Position abgezogen werden und der Gestrickeschlauch insofern den Halt oder zumindest den korrekten Sitz auf dem Metallbalg verliert.

Eine ähnliche Problematik besteht beim Stand der Technik nach der DE 10 2007 038 509 A1, in der ein auf einem Metallbalg aufgesetzter Gestrickeschlauch radial verdickte Umfangsbereiche aufweist, die ihn auf dem Metallbalg kraftschlüssig und/oder formschlüssig halten, die jedoch nicht durch Verpressen hergestellt worden sind. Vielmehr werden dort die radial verdickten Umfangsbereiche des Gestrickeschlauchs durch einfaches oder mehrfaches Umschlagen, durch Einkrempeln oder Einrollen des Gestrickeschlauchs hergestellt. Als Anwendungsbereich der flexiblen Leitung nach diesem Stand der Technik ist folgerichtig eine Abgasanlage angegeben, bei der eine Längung des Metallbalgs nicht zu befürchten ist und eine Fixierung des Gestrickeschlauchs, die auch von einer Streckung bzw. Längung des Metallbalgs unbeeinflusst bleibt, verzichtbar ist.

Um einen Gestrickeschlauch zur Bedämpfung von Schwingungen des Metallbalgs derart formschlüssig an diesem festzulegen, dass eine Längung bzw. Streckung des Metallbalgs nicht zu einem Verlust des Formschlusses und des korrekten Sitzes des Gestrickeschlauchs führt, ist schließlich in der DE 10 2008 017 598 A1 vorgeschlagen worden, den Gestrickeschlauch durch eine zumindest bereichsweise Einschnürung seiner Maschen in Umfangsrichtung formschlüssig am Metallbalg festzulegen, wobei die Einschnürung in einen Zwischenraum zwischen zwei Außenkrempen zweier Metallbalgwellungen hineinreicht. Diese Einschnürung ist entweder einseitig oder beidseits an den Endwellen des Metallbalgs vorgesehen bzw. im Bereich der Enden des Gestrickeschlauchs, und sie wird vorzugsweise durch Spannen einer Anzahl von Drähten des Gestrickeschlauchs mittels Verdrillen oder Verzwirbeln erzeugt. Alternativ kann ein zusätzlicher Spannring vorgesehen sein, der die Einschnürung des Gestrickeschlauchs verursacht.

Aus der DE 20 2010 005 339 U1 ist ein flexibles Leitungselement mit einem Gestrickeschlauch bekannt geworden, der einen um den Schlauchumfang umlaufenden, durch Verpressen verdichteten Bereich enthält und in diesem Bereich formschlüssig auf dem Metallbalg sitzt. Es handelt sich demnach nicht um ein durch insgesamtes Verpressen eines Gestrickeschlauchs hergestelltes Gestrickekissen nach dem Vorbild der DE 200 23 409 U1, welches, wie oben erwähnt, nur für relativ kurze Metallbälge und für Einbausituationen mit ausreichendem Einbauraum in Frage kommt. Der Gestrickeschlauch nach diesem Stand der Technik ist auch nicht lediglich mit einer Materialdopplung wie in der DE 10 2007 038 509 A1 versehen, da er auch bei einer Streckung des Metallschlauchs in korrekter Einbaulage auf diesem verbleiben soll bzw. diese Einbaulage auch bei längerem Betrieb des flexiblen Leitungselements mit mannigfachen Vibrationen und Bewegungen nicht verlieren soll.

Der verdichtete Bereich des Gestrickerings oder Gestrickeschlauchs ist schließlich auch nicht wie im Stand der Technik nach der EP 1 607 598 A1 an den Endwellen des Metallbalgs, sondern in einem mittleren Teil desselben angeordnet. Der verdichtete Bereich ist also weiter von den Enden des Metallbalgs beabstandet als von dessen Mitte.

Eines der Hauptprobleme des Standes der Technik nach der EP 1 607 598 A1 ist damit gelöst, da beim erfindungsgemäßen flexiblen Leitungselement der Gestrickeschlauch auch dann nicht seinen korrekten Sitz verliert, wenn der Metallbalg über ein Maß hinaus gestreckt wird, das die Dehnbarkeit des Gestrickeschlauchs insgesamt übersteigt. Allerdings kann die Montage des Gestrickeschlauchs auf dem Metallbalg aufgrund seines mittig angeordneten verdickten Bereichs sehr problematisch sein, da hierfür eine schiebende oder ziehende Bewegung notwendig ist.

Ausgehend von diesem Stand der Technik liegt der vorliegenden Erfindung die Aufgabe zugrunde, eine alternative Lösung einer Festlegung eines aus Metalldraht gefertigten Gestrickeschlauchs auf einem Metallbalg vorzuschlagen, um diesen zu dämpfen und mit diesem ein flexibles Leitungselement zu bilden, wobei die oben skizzierten Problemstellungen des Standes der Technik vermieden werden.

Gelöst ist diese Aufgabe durch ein flexibles Leitungselement mit den Merkmalen des Patentanspruchs 1 sowie durch ein Verfahren mit den Merkmalen des Patentanspruchs 7.

Bevorzugte Ausgestaltungen des erfindungsgemäßen flexiblen Leitungselements ergeben sich aus den Ansprüchen 2 bis 6; vorteilhafte Weiterbildungen des erfindungsgemäßen Verfahrens sind in den Ansprüchen 8 und 9 niedergelegt.

Gemäß der vorliegenden Erfindung wird der Gestrickeschlauch also solcherart auf den Metallbalg aufgezogen, dass seine im Rundstrickverfahren gefertigten Maschenreihen im Wesentlichen axial verlaufen, also im Wesentlichen um 90° gegenüber der bisher üblichen Richtung der Maschenreihen gedreht sind.

Hierzu ist der Gestrickeschlauch besonders bevorzugt im erfindungsgemäßen Verfahren hergestellt und auf den Metallbalg aufgebracht worden. Hierbei wird zunächst ein Drahtschlauch, wie im Stand der Technik üblich, im Rundstrickverfahren mit umlaufenden Maschenreihen gestrickt. Sodann wird der Drahtschlauch, wie ebenfalls an sich bekannt, unter Ausbildung eines unteren und eines oberen Endes desselben abgelängt. Danach wird der Drahtschlauch jedoch nicht gleich als Gestrickeschlauch auf den Metallbalg aufgezogen, sondern er wird zu einem zweilagigen flächigen Gestricke zusammengelegt. Nach einer gedachten Drehung dieses zweilagigen flächigen Gestrickes um 90° wird daraus wieder ein Schlauch hergestellt, indem die oberen und unteren Enden des ursprünglichen Drahtschlauchs zusammengefügt werden, so dass sich ein zylindrischer Gestrickeschlauch ergibt, dessen Maschenreihen nun nicht mehr umlaufend orientiert sind, sondern axial verlaufen. Die ursprüngliche Achse des ursprünglichen, rundgestrickten Drahtschlauchs ist also zu einem gedachten Ring gebogen worden, der in einer auf der Gestrickeschlauchachse im Wesentlichen senkrechten Ebene verläuft.

Durch diese erfindungsgemäße Änderung der Richtung der Maschenreihen wird der Gestrickeschlauch in Axialrichtung des Metallbalgs weniger flexibel, da sich die Maschen in Axialrichtung nicht ineinander bewegen können. Die Flexibilität des so hergestellten Gestrickeschlauchs bemisst sich also nur noch nach der Elastizität und Biegsamkeit des verwendeten Drahtmaterials. Aufgrund der erfindungsgemäßen Festlegung des Gestrickeschlauchs auf dem Metallbalg mittels eines eher mittig angeordneten verdichteten Bereichs ist die axiale Beweglichkeit des Gestrickeschlauchs jedoch zweitrangig geworden. Denn dieser verbleibt auch ohne hohe axiale Elastizität in jedem Fall in korrekter Einbaulage auf dem Metallbalg und bedämpft diesen in der beabsichtigten Art und Weise.

Die vorliegende Erfindung bedeutet also eine vollständige Abkehr von den bisher als unverzichtbar gehaltenen Maschenorientierung eines zur Bedämpfung eines Metallbalgs eingesetzten Gestrickeschlauchs oder Gestrickerings.

Durch die veränderte Maschenrichtung vereinfacht sich darüber hinaus die Montage des Gestrickeschlauchs auf dem Metallbalg, und zwar hauptsächlich durch die - bislang als nachteilig empfundene - verringerte Beweglichkeit des Gestrickeschlauchs in Axialrichtung. Die höhere axiale Stabilität ermöglicht insbesondere auch, dass der erfindungsgemäße verdichtete Bereich des Gestrickeschlauchs mit einem relativ weit nach innen überstehenden Wulst versehen werden kann, ohne die Montierbarkeit des Gestrickeschlauchs auf dem Metallbalg zu beeinträchtigen. Ein weiter Überstand des Wulstes erhöht naturgemäß die Sicherheit des Sitzes des Gestrickeschlauchs auf dem Metallbalg.

Der verdichtete Bereich des Gestrickeschlauchs des erfindungsgemäßen flexiblen Leitungselements kann, wie an sich bekannt, durch axiale Stauchung des Gestrickes hergestellt werden. Im Rahmen der vorliegenden Erfindung ist es jedoch auch möglich, den verdichteten Bereich durch radiale Verpressung oder durch eine Kombination einer axialen Stauchung mit einer radialen Verpressung zu erzeugen.

In jedem Fall ist es vorteilhaft, wenn der verdichtete Bereich des Gestrickeschlauchs mindestens einen radial nach innen über die Gestrickeschlauchinnenfläche hinaus reichenden Wulst aufweist, wobei dieser Wulst zweckmäßigerweise zwischen zwei Wellenaußenkrempen des Metallbalgs hineinreicht und den Gestrickeschlauch also formschlüssig am Metallbalg festlegt. Hierbei kann vorgesehen sein, dass der verdichtete Bereich entlang seines Außenumfangs, dem Wulst gegenüberliegend, eine Sicke aufweist. Insgesamt liegt dann eine umlaufende Einschnürung vor, die jedoch lediglich durch Verpressen erzeugt worden ist.

Besondere Vorteile ergeben sich bei der erfindungsgemäßen Fertigung des Gestrickeschlauchs mit veränderter Maschenreihenrichtung auch dadurch, dass die oberen und unteren Enden des ursprünglichen Drahtschlauchs beispielsweise durch Verschweißen miteinander verbunden werden. Denn hierdurch stehen keine einzelnen, abgeschnittenen Drähte mehr vom Gestrickeschlauch ab, die aufwändig versäumt werden müssten. Auch hierbei entstehender zusätzlicher Schnittabfall fällt erfindungsgemäß nicht mehr an.

Insbesondere das Verschweißen der oberen und unteren Enden des ursprünglichen Drahtschlauchs bietet gegenüber dem Stand der Technik erhebliche Vorteile, wenn hierbei eine Naht ausgebildet wird, die über beide Enden des Drahtschlauchs verläuft und dort vorhandene, durchtrennte Maschen im wesentlichen vollständig erfasst. Denn im Stand der Technik muss ein herkömmlich ausgebildeter Gestrickeschlauch insgesamt drei Mal geschnitten werden. Mit dem ersten Schnitt wird der endlos gefertigte Gestrickeschlauch auf die gewünschte Länge abgelängt. Dann wird dieser abgelängte Gestrickeschlauch auf den Metallbalg gezogen und an Endhülsen fixiert. Hierbei entstehen überstehende Enden des Gestrickeschlauchs, die mit zwei weiteren Schnitten entfernt werden müssen. Bei jedem Schnitt, insbesondere bei den beiden letzten Schnitten, entsteht nicht nur Abfall, sondern es werden Maschen des Gestrickes durchtrennt, so dass halbierte Maschen, also Drahtstücke in Form eines halbierten Rings entstehen, die nicht zusammenhängen und daher als Verschmutzung in das flexible Leitungselement gelangen können. Dies umso mehr, als das Abschneiden der überstehenden Enden eines Gestrickeschlauchs nach dem Stand der Technik in einem Verfahrensstadium erfolgt, in dem der Gestrickeschlauch bereits auf den Metallbalg aufgezogen ist. Der Verbleib von Abfalldrahtstücken im flexiblen Leitungselement muss jedoch vermieden werden, da dies je nach Einsatzzweck des flexiblen Leitungselements zu Störungen und gegebenenfalls Beschädigungen von anderen Bauteilen führen können.

Ein Ausführungsbeispiel für die Verwirklichung der vorliegenden Erfindung wird im Folgenden anhand der beigefügten Zeichnungen näher beschrieben und erläutert: Es zeigen:
- Figur 1: eine schematische Seitenansicht eines erfindungsgemäß ausgebildeten flexiblen Leitungselements;
- Figur 2: eine erste Phase beim erfindungsgemäßen Herstellen eines Gestrickeschlauchs für ein erfindungsgemäßes flexibles Leitungselement;
- Figur 3: eine zweite Phase des Herstellens eines Gestrickeschlauchs;

- Figur 4: eine dritte Phase des Herstellens eines Gestrickeschlauchs.

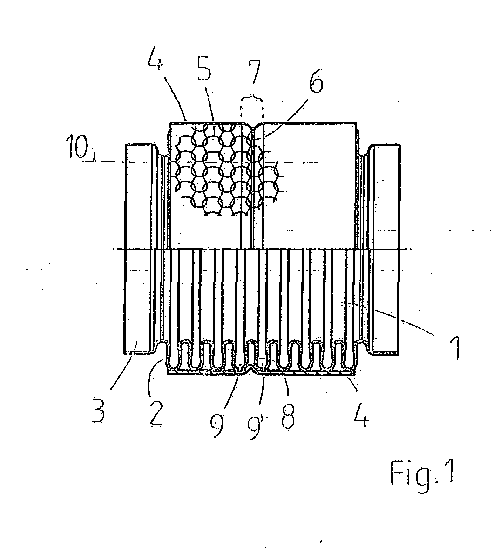

Figur 1 zeigt eine schematische Seitenansicht eines erfindungsgemäß ausgebildeten flexiblen Leitungselements, wobei die untere Hälfte desselben in Schnittdarstellung gezeigt ist.

Das Leitungselement besteht im Wesentlichen aus einem Metallbalg 1 mit insgesamt neun Wellen 2, der an seinen Enden jeweils mit einem Balgbord 3 versehen ist, um an weiterführende Rohrleitungen einer im weiteren nicht dargestellten Abgasanlage angeschlossen zu werden. Außen auf den Metallbalg 1 ist ein Gestrickeschlauch 4 aus metallischem Drahtmaterial 5 aufgezogen, um den Metallbalg 1 zu bedämpfen. Etwa mittig ist der Gestrickeschlauch 4 mit einer Einschnürung 6 versehen, die anders als im Stand der Technik durch einen mittels Verpressen verdichteten Bereich 7 entstanden ist. Dieser verdichtete Bereich bildet radial innenliegend einen Wulst 8 aus, der zwischen zwei Außenkrempen 9, 9' zweier Wellen des Metallbalgs 1 hineinreicht und den Gestrickeschlauch 4 an dieser Stelle formschlüssig am Metallbalg 1 festlegt.

Wie anhand Figur 1 leicht nachzuvollziehen ist, verliert der Gestrickeschlauch 4 seinen korrekten Sitz auf dem Metallbalg 1 auch dann nicht, wenn dieser gestreckt wird. Denn die formschlüssige Verbindung am verdichteten Bereich 7 bleibt auch dann bestehen, während die restlichen Bereiche des Gestrickeschlauchs 4 relativ zu den Außenkrempen 9 der Wellen 2 des Metallbalgs 1 beweglich sind und ohne Verlust ihrer Dämpfungswirkung die Streckbewegung des Metallbalgs 1 nicht mitmachen.

In Figur 1 ist des Weiteren symbolisch dargestellt, dass die Maschenrichtung 10 des Gestrickeschlauchs 4 vom Stand der Technik verschieden ist: Die im Rundstrickverfahren hergestellten, ursprünglich umlaufenden Maschenreihen 10 sind vorliegend axial orientiert, also von der ursprünglichen Strickrichtung ausgehend um 90° gedreht. Insofern weist der Gestrickeschlauch 4 des Ausführungsbeispiels auch eine Naht auf, die axial verläuft, in Figur 1 jedoch nicht sichtbar ist. Mit dieser Naht wurde aus dem flächig zusammengelegten, ursprünglich rundgestrickten Drahtschlauch der Gestrickeschlauch 4, der auf den Metallbalg 1 aufgezogen werden konnte.

Die axiale Orientierung der Maschenreihen 10 hat, wie bereits beschrieben, den Effekt, dass der Gestrickeschlauch 4 sich kaum mehr axial längen lässt. Dies ist nicht nachteilig, da der Gestrickeschlauch 4 erfindungsgemäß mittig mit nur einem verdichteten Bereich 7 formschlüssig auf dem Metallbalg 1 sitzt. Hinsichtlich der Montierbarkeit des Gestrickeschlauchs 4, der mit seiner Einschnürung 6 auf den Metallbalg 1 aufgezogen werden muss, ist die höhere axiale Stabilität hingegen vorteilhaft. Außerhalb des verdichteten Bereichs 7 ist der Gestrickeschlauch 4 darüber hinaus in Umfangsrichtung stärker dehnbar als Gestrickeschläuche nach dem Stand der Technik, deren Maschenreihen 10 in Umlaufrichtung verlaufen. Ein Aufweiten des erfindungsgemäß ausgebildeten Gestrickeschlauchs 4 zum Zweck des Aufziehens auf den Metallbalg 1 ist dementsprechend leichter möglich als beim Stand der Technik.

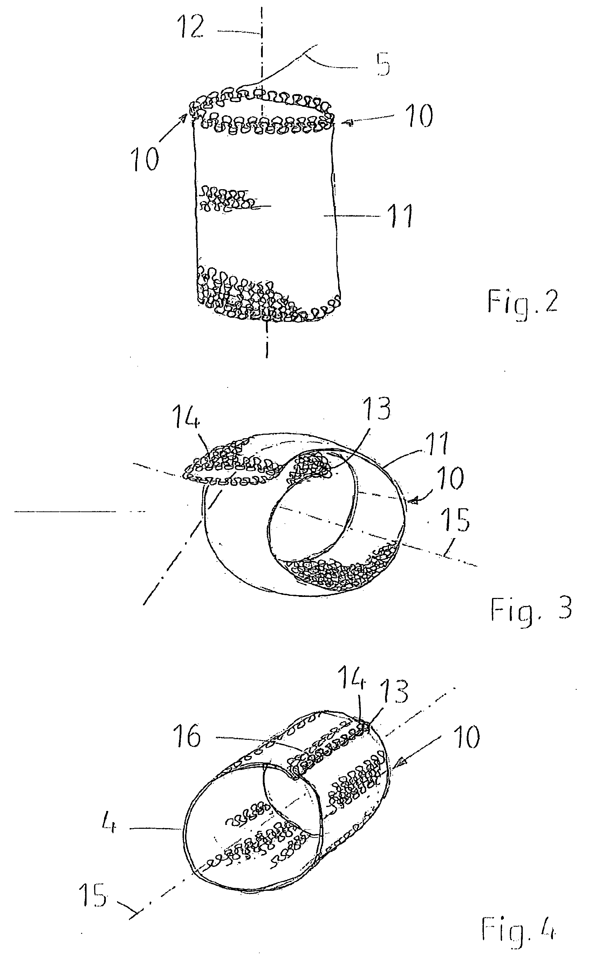

Die Figuren 2 bis 4 zeigen drei Phasen beim erfindungsgemäßen Herstellen eines Gestrickeschlauchs 4 aus metallischem Drahtmaterial 5. wie er beim flexiblen Leitungselement aus Figur 1 verwendet wird, jeweils in schematischen perspektivischen Ansichten:
In Figur 2 ist dargestellt, wie zunächst ein Drahtschlauch 11, wie im Stand der Technik üblich, im Rundstrickverfahren mit umlaufenden Maschenreihen 10 aus dem metallischen Drahtmaterial 5 gestrickt wird. Dieser Drahtschlauch besitzt eine gedachte Achse 12, die im Stand der Technik mit der Achse des Metallbalgs zusammenfällt, auf den der Drahtschlauch 11 aufgezogen wird, um ein flexibles Leitungselemente zu bilden. Im vorliegenden Ausführungsbeispiel ist der Drahtschlauch 11 allerdings nicht der fertige Gestrickeschlauch 4, sondern nur eine Vorstufe desselben:
   Wie Figur 3 zeigt, wird der Drahtschlauch in einer zweiten Herstellungsphase zu einem zweilagigen flächigen Gestricke zusammengelegt, und dann dieses zweilagige flächige Gestricke zu einem zylindrischen Gestrickeschlauch gerollt, wobei die ursprüngliche Achse 12 des rundgestrickten Drahtschlauchs 11 zu einem gedachten Ring gebogen und ein oberes Ende 14 des Drahtschlauchs 11 auf ein unteres Ende 13 des Drahtschlauchs 11 gelegt wird. Wie Figur 3 verdeutlicht, verläuft die Orientierung der Maschenreihen 10 nun nicht mehr umlaufend, sondern parallel zu einer Achse 15, die durch das ringförmige Zusammenbiegen des zusammengelegten Drahtschlauchs 11 entsteht.

In Figur 4 ist eine dritte Phase des Herstellungsprozesses eines erfindungsgemäßen Gestrickeschlauchs 4 dargestellt, wobei hier das untere Ende 13 und das obere Ende 14 des ursprünglichen Drahtschlauchs 11 mittels einer Naht 16 zusammengefügt sind und der Gestrickeschlauch 4 zum Aufziehen auf einen Metallbalg bereit ist. Hier wird deutlich, dass die Maschenreihen 10 im fertigen Gestrickeschlauch 4 axial orientiert sind, und nicht mehr um den Umfang des Gestrickeschlauchs 4 umlaufen, wie dies im Stand der Technik üblich ist. Gleichzeitig liegt das Gestrickematerial des Gestrickeschlauchs 4 doppellagig vor. Wie erwähnt, enthält das flexible Leitungselement, das in Figur 1 dargestellt ist, einen ebensolchen Gestrickeschlauch 4, wie er in Figur 4 symbolisch dargestellt ist.

Die Naht 16 ist beim vorliegenden Ausführungsbeispiel im übrigen mittels Verschweißen entstanden, was deswegen vorteilhaft ist, weil die unteren und oberen Enden 13; 14 des rundgestrickten Drahtschlauchs 11 nicht versäumt werden müssen; das Verschweißen in der Naht 16 stellt vielmehr sicher, dass keine einzelnen Drähte 5 vom Gestrickeschlauch 4 abstehen. Auch ein Schnittabfall für das Versäumen der Enden entsteht nicht. Darüber hinaus sind die Enden 13, 14 des rundgestrickten Drahtschlauchs 11 im vorliegenden Ausführungsbeispiel unter Ausbildung einer Naht 16 verschweißt, die die Kanten beider Enden 13, 14 erfasst und so sicherstellt, dass dort vorhandene, durchtrennte Maschen, die durchaus auch als halbkreisförmige Drahtstückchen vorliegen können, die sich in den verbliebenen Maschen (nicht dauerhaft) verhakt haben, dauerhaft in der Naht fixiert werden. Es ist somit also ausgeschlossen, dass abgeschnittene halbe Maschen bzw. Drahtstückchen vom Gestrickeschlauch abfallen und insbesondere in das flexible Leitungselement oder weiterführende Leitungen gelangen können.

## Patentansprüche

1. Flexibles Leitungselement, insbesondere für die Abgasanlage eines Kraftfahrzeugs, umfassend einen schraubengangförmig oder ringförmig gewellten Metallbalg (1) sowie einen aus Metalldraht gefertigten Gestrickering oder Gestrickeschlauch (4), der zur Bedämpfung von Schwingungen auf den Metallbalg (1) aufgesetzt ist und zumindest einen Abschnitt desselben überdeckt, wobei der Gestrickering oder Gestrickeschlauch (4) mittels zumindest eines um den Schlauchumfang umlaufenden, durch Verpressen verdichteten Bereichs (7) kraftschlüssig und/oder formschlüssig auf dem Metallbalg (1) sitzt, und wobei der verdichtete Bereich (7) weiter von den Enden (3) des Metallbalgs (1) als von dessen Mitte beabstandet ist,
**dadurch gekennzeichnet,**
**dass** der Gestrickering oder Gestrickeschlauch (4) solcherart auf dem Metallbalg (1) sitzt, dass seine im Rundstrickverfahren gefertigten Maschenreihen (10) im Wesentlichen axial verlaufen.

2. Flexibles Leitungselement nach Anspruch 1,
**dadurch gekennzeichnet,**
**dass** nur ein verdichteter Bereich (7) vorgesehen ist.

3. Flexibles Leitungselement nach einem der Ansprüche 1 oder 2,
**dadurch gekennzeichnet,**
**dass** der verdichtete Bereich (7) durch axiale Stauchung und/oder radiale Verpressung entstanden ist.

4. Flexibles Leitungselement nach mindestens einem der Ansprüche 1 bis 3,
**dadurch gekennzeichnet,**
**dass** der verdichtete Bereich (7) mindestens einen radial nach innen zwischen zwei Wellenaußenkrempen (9, 9') des Metallbalgs (1) hineinreichenden Wulst (8) aufweist.

5. Flexibles Leitungselement nach Anspruch 4,
**dadurch gekennzeichnet,**
**dass** der verdichtete Bereich (7) entlang seines Außenumfangs, dem Wulst (8) gegenüberliegend, eine Sicke aufweist, sodass insgesamt eine umlaufende Einschnürung (6) vorliegt.

6. Flexibles Leitungselement nach mindestens einem der Ansprüche 1 bis 5;
**dadurch gekennzeichnet,**
**dass** der Gestrickering oder Gestrickeschlauch (4) solcherart hergestellt ist, dass zunächst ein Drahtschlauch (11) im Rundstrickverfahren zylindrisch gestrickt und zur Bildung eines oberen (14) und eines unteren Drahtschlauchendes (13) abgelängt wird, und dass dann der Drahtschlauch (11) flach zusammengelegt und zu einem zweilagigen Gestrickeschlauch (4) geformt wird, indem seine oberen (14) und unteren Drahtschlauchenden (13) zusammengefügt werden, so dass die Drahtschlauchenden (13, 14) nunmehr in Axialrichtung (15) des Gestrickeschlauchs (4) verlaufen, und die ursprüngliche Achse (12) des Drahtschlauchs (11) zu einem Ring gebogen ist, der in einer auf der Gestrickeschlauchachse (15) im Wesentlichen senkrechten Ebene verläuft.

7. Verfahren zum Aufbringen eines aus Metalldraht gefertigten Gestrickeschlauchs (4) auf einen Metallbalg (1), um diesen zu dämpfen und mit diesem ein flexibles Leitungselement insbesondere für die Abgasanlage eines Kraftfahrzeugs zu bilden, umfassend die Verfahrensschritte:
- Stricken eines Drahtschlauchs (11) im Rundstrickverfahren mit umlaufenden Maschenreihen (10),
- Ablängen des Drahtschlauchs (11) unter Ausbildung eines unteren (13) und eines oberen (14) Endes desselben,
- flaches Zusammenlegen des Drahtschlauchs (11) zu einem zweilagigen flächigen Gestricke;
- Zusammenfügen der oberen (14) und unteren Enden (13) des Drahtschlauchs (11) unter Ausbildung des Gestrickeschlauchs (4), so dass dessen Maschenreihen (10) nun axial verlaufen;
- Aufschieben oder Aufziehen des Gestrickeschlauchs (4) auf den Metallbalg (1);
- Verdichten eines umlaufenden Bereichs des Gestrickeschlauchs (4) mittels Verpressen zu einem verdichteten Bereich (7).

8. Verfahren nach Anspruch 7,
**dadurch gekennzeichnet.**
**dass** der Gestrickeschlauch (4) mittels des verdichteten Bereichs (7) am Metallbalg (1) befestigt wird, indem dieser kraftschlüssig und/oder formschlüssig auf dem Metallbalg (1) sitzt.

9. Verfahren nach mindestens einem der Ansprüche 7 oder 8,
**dadurch gekennzeichnet,**
**dass** das Zusammenfügen der oberen (14) und unteren Enden (13) des Drahtschlauchs (11) durch Verschweißen unter Ausbildung einer Naht (16) erfolgt, wobei die Naht (16) über beide Enden (13, 14) des Drahtschlauchs (11) verläuft und dort vorhandene, durchtrennte Maschen im wesentlichen vollständig erfasst.

## Claims

1. Flexible duct element, especially for the exhaust gas system of a motor vehicle, comprising a helically or annularly corrugated metal bellows (1) and a knitted ring or knitted tube (4) made from metal wire which, for damping vibrations, is mounted on the metal bellows (1) and covers at least a portion thereof, wherein the knitted ring or knitted tube (4), by means of at least one region (7) that runs around the circumference of the tube and is compacted by compression, is seated on the metal bellows (1) by means of force-based and/or interlocking connection, and wherein the compacted region (7) is spaced further from the ends (3) of the metal bellows (1) than from the centre thereof,
**characterised in that**
the knitted ring or knitted tube (4) is seated on the metal bellows (1) in such a way that its rows (10) of meshes, which have been produced in a circular knitting process, run substantially axially.

2. Flexible duct element according to claim 1,
**characterised in that**
only one compacted region (7) is provided.

3. Flexible duct element according to either one of claims 1 and 2,
**characterised in that**
the compacted region (7) has been formed by axial compression and/or by radial compression.

4. Flexible duct element according to at least one of claims 1 to 3,
**characterised in that**
the compacted region (7) has at least one protuberance (8) extending radially inwards between two external crimps (9, 9') in the corrugations of the metal bellows (1).

5. Flexible duct element according to claim 4,
**characterised in that**
the compacted region (7) has an indentation around its outer circumference, opposite the protuberance (8), so that overall a circumferential constriction (6) is present.

6. Flexible duct element according to at least one of claims 1 to 5,
**characterised in that**
the knitted ring or knitted tube (4) has been produced by first cylindrically knitting a wire tube (11) in a circular knitting process and cutting a length thereof to form an upper (14) and a lower (13) wire tube end, and then flattening the wire tube (11) and forming it into a two-layer knitted tube (4) by joining together its upper (14) and lower (13) wire tube ends so that the wire tube ends (13, 14) then run in the axial direction (15) of the knitted tube (4), and bending the original axis (12) of the wire tube (11) to form a ring which runs in a plane substantially perpendicular to the knitted tube axis (15).

7. Method of mounting a knitted tube (4) made of metal wire on a metal bellows (1) in order to dampen the latter and to form therewith a flexible duct element, especially for the exhaust gas system of a motor vehicle, comprising the steps of:
- knitting a wire tube (11) in a circular knitting process with circumferential rows (10) of meshes;
- cutting a length of the wire tube (11) to form a lower (13) and an upper (14) end thereof;
- flattening the wire tube (11) to form a two-layer flat knitted structure;
- joining together the upper (14) and lower (13) ends of the wire tube (11) to form the knitted tube (4), so that its rows (10) of meshes then run axially;
- pushing or pulling the knitted tube (4) onto the metal bellows (1);
- compacting a circumferential region of the knitted tube (4) by means of compression to form a compacted region (7).

8. Method according to claim 7,
**characterised in that**
the knitted tube (4) is attached to the metal bellows (1) by means of the compacted region (7) by seating the knitted tube on the metal bellows (1) by means of force-based and/or interlocking connection.

9. Method according to at least one of claims 7 and 8,
**characterised in that**
the joining together of the upper (14) and lower (13) ends of the wire tube (11) is effected by welding to form a seam (16), the seam (16) running across both ends (13, 14) of the wire tube (11) and substantially entirely encompassing severed meshes at that location.

## Revendications

1. Élément de conduite flexible, en particulier pour le système d'échappement d'un véhicule automobile, comprenant un soufflet métallique (1) hélicoïdal ou annulairement ondulé et comprenant une bague tricotée ou un tuyau souple tricoté (4) fabriqué(e) en fil métallique, qui est installé(e) sur le soufflet métallique (1) pour amortir les vibrations et qui recouvre au moins une partie de ce dernier, sachant que la bague tricotée ou le tuyau souple tricoté (4) est monté(e) à force et/ou par complémentarité de forme sur le soufflet métallique (1) par l'intermédiaire d'au moins une région (7) faisant le tour de la périphérie du tuyau souple et compactée par pressage, et sachant que la région compactée (7) est plus éloignée des extrémités (3) du soufflet métallique (1) que du milieu de ce dernier,
**caractérisé en ce que** la bague tricotée ou le tuyau souple tricoté (4) est monté(e) sur le soufflet métallique (1) de telle sorte que ses rangées de mailles (10) fabriquées par tricotage circulaire s'étendent sensiblement axialement.

2. Élément de conduite flexible selon la revendication 1, **caractérisé en ce qu'**il est prévu une seule région compactée (7).

3. Élément de conduite flexible selon l'une des revendications 1 ou 2, **caractérisé en ce que** la région compactée (7) est obtenue par écrasement axial et/ou par compression radiale.

4. Élément de conduite flexible selon au moins une des revendications 1 à 3, **caractérisé en ce que** la région compactée (7) présente au moins un bourrelet (8) s'étendant radialement vers l'intérieur entre deux rebords extérieurs d'ondulation (9, 9') du soufflet métallique (1).

5. Élément de conduite flexible selon la revendication 4, **caractérisé en ce que** la région compactée (7) présente un creux le long de son pourtour extérieur à l'opposé du bourrelet (8), de sorte qu'on obtient globalement un rétrécissement périphérique (6).

6. Élément de conduite flexible selon au moins une des revendications 1 à 5, **caractérisé en ce que** la bague tricotée ou le tuyau souple tricoté (4) est fabriqué(e) de telle sorte qu'un tuyau souple en fil métallique (11) est d'abord étiré sous une forme cylindrique par tricotage circulaire et est tronçonné pour former une extrémité supérieure (14) et une extrémité inférieure (13) de tuyau souple en fil métallique, et **en ce que** le tuyau souple en fil métallique (11) est ensuite replié à plat et façonné en un tuyau souple tricoté (4) à deux couches par le fait que son extrémité supérieure (14) et son extrémité inférieure (13) de tuyau souple en fil métallique sont réunies, de sorte que les extrémités (13, 14) de tuyau souple en fil métallique s'étendent maintenant dans la direction axiale (15) du tuyau souple tricoté (4), et l'axe initial (12) du tuyau souple en fil métallique (11) est recourbé en une bague qui s'étend dans un plan sensiblement perpendiculaire à l'axe (15) du tuyau souple tricoté.

7. Procédé d'application sur un soufflet métallique (1) d'un tuyau souple tricoté (4) fabriqué en fil métallique, afin d'amortir ce soufflet et de former avec lui un élément de conduite flexible, en particulier pour le système d'échappement d'un véhicule automobile, comprenant les étapes suivantes :
- tricotage d'un tuyau souple en fil métallique (11) par tricotage circulaire avec des rangées de mailles périphériques (10) ;
- tronçonnage du tuyau souple en fil métallique (11) en formant une extrémité inférieure (13) et une extrémité supérieure (14) dudit tuyau souple ;
- repliage à plat du tuyau souple en fil métallique (11) pour former un tricot plan à deux couches ;
- réunion de l'extrémité supérieure (14) et de l'extrémité inférieure (13) du tuyau souple en fil métallique (11) en formant le tuyau souple tricoté (4), de sorte que les rangées de mailles (10) de ce dernier s'étendent maintenant axialement ;
- enfilage, par poussée ou par traction, du tuyau souple tricoté (4) sur le soufflet métallique (1) ;
- compactage par pressage d'une région périphérique du tuyau souple tricoté (4) pour former une région compactée (7).

8. Procédé selon la revendication 7, **caractérisé en ce que** le tuyau souple tricoté (4) est fixé par l'intermédiaire de la région compactée (7) sur le soufflet métallique (1) par le fait que celle-ci est montée à force et/ou par complémentarité de forme sur le soufflet métallique (1).

9. Procédé selon au moins une des revendications 7 ou 8, **caractérisé en ce que** la réunion des extrémités supérieure (14) et inférieure (13) du tuyau souple en fil métallique (11) s'effectue par soudage en formant une soudure (16), sachant que la soudure (16) s'étend sur les deux extrémités (13, 14) du tuyau souple en fil métallique (11) et englobe sensiblement totalement les mailles sectionnées qui y sont présentes.
